# EUROPÄISCHE PATENTSCHRIFT

(11) **EP 3 241 282 B1**
(45) Veröffentlichungstag und Bekanntmachung des Hinweises auf die Patenterteilung: **06.03.2019**
(21) Anmeldenummer: 15817411.0
(22) Anmeldetag: 29.12.2015
(51) Int. Cl.: H04B 3/54, B23K 9/10, B32B 5/00, H01F 27/28, H02J 3/38

(54) **LEISTUNGSÜBERTRAGUNGSSYSTEM**
POWER TRANSMISSION SYSTEM
SYSTÈME DE TRANSMISSION DE PUISSANCE

(30) Priorität: 29.12.2014 AT 9342014
(43) Veröffentlichungstag der Anmeldung: 08.11.2017
(73) Patentinhaber: Fronius International GmbH, 4643 Pettenbach (AT)
(72) Erfinder: ANZINGER-WEITMANN, Manfred, 4060 Leonding (AT); FASTHUBER, Christian, Wels 4600 (AT); FRIEDL, Helmut, 4621 Sipbachzell (AT)
(74) Vertreter: Isarpatent
(86) Internationale Anmeldenummer: PCT/EP2015/081323
(87) Internationale Veröffentlichungsnummer: WO 2016/107857

(56) Entgegenhaltungen:
- US-A- 3 815 054
- US-A1- 2008 084 937

## Beschreibung

Die Erfindung betrifft ein Leistungsübertragungssystem, insbesondere ein Schweißsystem, zur Leistungsübertragung einer elektrischen Leistung von einer Leistungsquelle zu einer Leistungssenke über ein Leistungstransferkabel, wobei ein Nutzdatensignal während des Leistungstransfers übertragbar ist, sowie ein Verfahren zur Nutzdatenübertragung über ein Leistungstransferkabel.

In vielen Anwendungen wird eine elektrische Leistung von einer Leistungsquelle zu einer Leistungssenke übertragen. Eine Leistungsquelle, beispielsweise eine Stromquelle, generiert eine elektrische Leistung, die über ein Leistungstransferkabel an eine Leistungssenke, beispielsweise einem elektrischen Verbraucher, übertragen wird. Bei einem elektrischen Schweißsystem verfügt ein Schweißgerät über eine Schweißstromquelle, die einen elektrischen Schweißstrom für einen Schweißbrenner liefert, wobei der Schweißstrom über Stromleitungen eines Leistungstransferkabels von dem Schweißgerät zu dem Schweißbrenner transferiert wird.

Die WO 2012/058164 beschreibt ein Schweißsystem mit einer Verbindung zum Erhalt von Schweißleistung von einer Schweißstromquelle über ein Kabel, wobei eine Steuersignalverbindung vorgesehen ist, um Schweißbetriebsdaten mit der Schweißstromquelle über ein Signalkabel auszutauschen. Das Schweißsystem verfügt ferner über eine Drahtvorschubverbindung, die dafür vorgesehen ist, Schweißleistung von der Schweißstromquelle zu einem Drahtvorschub zu senden und Schweißbetriebssteuerdaten dem Drahtvorschub über ein Drahtvorschubkabel auszutauschen. Ein Kommunikationsschaltkreis ist dazu ausgelegt, die Schweißleistung der Schweißstromquelle und Daten von der Stromversorgung für die Drahtvorschubverbindung zu kombinieren sowie Daten von der Drahtvorschubverbindung für die Kommunikation zu der Steuer-Signalverbindung zu trennen.

Die US 2008/084937 A1 beschreibt ein Stromübertragungssystem mit einem Intra-Bündel-Power-Line-Carrier-System, wobei ein erster Übertragungspfad durch mehrere, parallel und kreisförmig angeordnete Leiter bereitgestellt wird, welche um einen oder mehrere zentral angeordnete Leiter herum angeordnet sind, über welche ein zweiter Übertragungspfad bereitgestellt wird.

Die US 3 815 054 A beschreibt eine Frequenzübertragungsleitung mit einer Vielzahl von Einzelleitern gleichen Durchmessers, welche in einem Ring um einen zentralen Leiter angeordnet sind.

Aus der US 7381922 B2 ist ein Schweißsystem bekannt, bei dem eine Datenübertragung zwischen einer Drahtvorschubeinheit und einer Stromquelle eines Schweißgerätes über ein Schweißkabel erfolgt. Dabei werden Daten seriell über das Schweißkabel übertragen. Bei einem derartigen herkömmlichen Schweißsystem erfolgt jedoch die Datenübertragung nicht während der Übertragung der elektrischen Leistung, d.h. während des Schweißens, sondern während bestimmter Zeitintervalle, bei denen über das Kabel kein elektrischer Schweißstrom an den Schweißbrenner übertragen wird. Dieses Schweißsystem hat somit den Nachteil, dass während des Schweißvorganges keine Datenübertragung zwischen dem Schweißgerät und dem Schweißbrenner, insbesondere dessen Drahtvorschubeinheit, stattfinden kann. Demzufolge können bei diesem herkömmlichen Schweißsystem während des Schweißvorganges keine Schweißparameter oder dergleichen an dem Schweißbrenner eingestellt werden bzw. kann das Schweißgerät von dem Schweißbrenner auch keine Daten über den Schweißvorgang empfangen.

Es ist daher eine Aufgabe der vorliegenden Erfindung, ein Leistungsübertragungssystem zur Leistungsübertragung einer elektrischen Leistung von einer Leistungsquelle zu einer Leistungssenke zu schaffen, bei der während der Leistungsübertragung zuverlässig ein Nutzdatensignal zwischen der Leistungsquelle und der Leistungssenke übertragen werden kann.

Diese Aufgabe wird erfindungsgemäß durch ein Leistungsübertragungssystem mit den in Patentanspruch 1 angegebenen Merkmalen gelöst.

Die Erfindung schafft demnach ein Leistungsübertragungssystem zur Leistungsübertragung einer elektrischen Leistung von einer Leistungsquelle zu einer Leistungssenke, die über ein Leistungstransferkabel mit einer Leistungsquelle verbunden ist, wobei die Leistungsquelle und die Leistungssenke jeweils einen ersten Pol mit einem ersten elektrischen Potential und einem zweiten Pol mit einem zweiten elektrischen Potential aufweist, wobei die Pole über parallele Stromleitungen eines ersten Leitungspaares und eines zweiten Leitungspaares des Leistungstransferkabels verbunden sind, wobei während der Leistungsübertragung ein Nutzdatensignal zwischen der Leistungsquelle und der Leistungssenke über mindestens ein Leitungspaar mit Stromleitungen desselben elektrischen Potentials unbeeinflusst von der Leistungsübertragung übertragbar ist.

Das erfindungsgemäße Leistungsübertragungssystem bietet den Vorteil, dass ein Nutzdatensignal während des Leistungstransfers über das gleiche Leistungstransferkabel unbeeinflusst von der Leistungsübertragung zwischen einer Leistungsquelle und einer Leistungssenke übertragen werden kann. Hierdurch kann eine Steuerung eines Gerätes, welches die Leistungsquelle beinhaltet, während der Leistungsübertragung an ein anderes Gerät, welches die Leistungssenke enthält, während des Leistungstransfers gleichzeitig Steuerdaten zu dem zweiten Gerät übertragen und ferner gleichzeitig beispielsweise Sensordaten von dem zweiten Gerät über das Leistungstransferkabel empfangen. Dies bietet den Vorteil, dass Prozessparameter, insbesondere Parameter eines Schweißprozesses während des Leistungstransfers übertragen werden können, sodass die Qualität des Schweißerzeugnisses gesteigert werden kann. Gleichzeitig kann die Steuerung des Schweißgerätes während des Schweißvorganges beispielsweise Sensordaten empfangen und somit schnell auf Änderungen während des Schweißprozesses oder in der Schweißumgebung reagieren. Auch hierdurch wird die Qualität des in dem Schweißprozess erstellten Erzeugnisses gesteigert.

Bei einer möglichen Ausführungsform des erfindungsgemäßen Leistungsübertragungssystems weist das Gerät, welches die Leistungsquelle beinhaltet, und das Gerät, welches die Leistungssenke beinhaltet, jeweils ein an die Stromleitungen eines Leitungspaares des Leistungstransferkabels angeschlossenes oder schaltbares Nutzdatenmodem zur Übertragung des Nutzdatensignals auf.

Dieses Nutzdatenmodem ist vorzugsweise zum Senden und/oder Empfangen eines Nutzdatensignals in einem vorgegebenen Nutzdaten-Frequenzband vorgesehen.

Bei einer möglichen Ausführungsform liegt das Nutzdaten-Frequenzband für das über die Stromleitungen desselben elektrischen Potentials übertragene Nutzdatensignal in einem Frequenzbereich von 2 MHz bis 30 MHz.

Bei einer möglichen Ausführungsform des erfindungsgemäßen Leistungsübertragungssystems ist dieses Nutzdaten-Frequenzband vorgegeben. Bei einer weiteren möglichen Ausführungsform ist das Nutzdaten-Frequenzband in verschiedene Frequenzbandbereiche unterteilt, die zur Übertragung des Nutzdatensignals während des Leistungstransfers selektiv auswählbar sind.

Bei einer weiteren möglichen Ausführungsform des erfindungsgemäßen Leistungsübertragungssystems ist der erste Pol der Leistungsquelle, welcher ein erstes elektrisches Potential aufweist, über einen an einem ersten Ende des Leistungstransferkabels vorhandenen ersten Gabelpunkt mit einer ersten Stromleitung des Leistungstransferkabels und mit einer zweiten Stromleitung des Leistungstransferkabels verbunden, die beide über einen an einem zweiten Ende des Leistungstransferkabels vorhandenen zweiten Gabelpunkt mit dem ersten Pol der Leistungssenke verbunden sind, und wobei der zweite Pol der Leistungsquelle, welcher ein zweites elektrisches Potential aufweist, über einen an dem ersten Ende des Kabels vorhandenen dritten Gabelpunkt mit einer dritten Stromleitung des Leistungstransferkabels und mit einer vierten Stromleitung des Leistungstransferkabels verbunden ist, die beide über einen an dem zweiten Ende des Leistungstransferkabels vorhandenen vierten Gabelpunkt mit dem zweiten Pol der Leistungssenke verbunden sind.

An den beiden Enden des Leistungstransferkabels ist jeweils eine Drossel zur Entkopplung vorgesehen.

Die an den beiden Enden des Leistungstransferkabels vorgesehenen Drosseln sind jeweils stromkompensierte Drosseln.

Bei einer weiteren möglichen Ausführungsform des erfindungsgemäßen Leistungsübertragungssystems sind die Stromleitungen des Leistungstransferkabels derart ausgelegt, dass sie eine elektrische Leistung von mindestens einem 1 KW übertragen können.

Bei einer weiteren möglichen Ausführungsform des erfindungsgemäßen Leistungsübertragungssystems ist die Leistungsquelle eine Schweißstromquelle eines Schweißgerätes, die über die Stromleitungen des Leistungstransferkabels einen Schweißstrom an einen Schweißbrenner als Leistungssenke überträgt. Drahtvorschub mit angeschlossenem Schweißbrenner - durchgängig anstelle von Schweißbrenner verwenden

Bei einer weiteren möglichen Ausführungsform des erfindungsgemäßen Leistungsübertragungssystems ist eine Steuereinheit, vorgesehen, die an ein Nutzdatenmodem zur Übertragung eines Nutzdatensignals angeschlossen ist.

Bei einer weiteren möglichen alternativen Ausführungsform des erfindungsgemäßen Leistungsübertragungssystems weist die Leistungsquelle zumindest eine Anschlusskomponente wie eine Rapid Shutdown Box, einen Strangsammler, einen Stringcontroller, usw. einer Photovoltaikanlage auf, welche mit zumindest einem Photovoltaikmodul verbunden ist, und das über die Stromleitungen des Leistungstransferkabels einen elektrischen Gleichstrom an einen Wechselrichter der Photovoltaikanlage überträgt.

Bei einer weiteren möglichen alternativen Ausführungsform des erfindungsgemäßen Leistungsübertragungssystems weist die Leistungsquelle ein Ladegerät auf, das über die Stromleitungen des Leistungstransferkabels einen Ladestrom an einen aufladbaren Akkumulator als Leistungssenke überträgt.

Die Erfindung schafft ferner gemäß einem weiteren Aspekt ein Verfahren zum Übertragen eines Nutzdatensignals mit den in Patentanspruch 11 angegebenen Merkmalen.

Die Erfindung schafft demnach ein Verfahren zum Übertragen eines Nutzdatensignals zwischen einem ersten Gerät, das eine Leistungsquelle aufweist, und einem zweiten Gerät, das eine Leistungssenke aufweist, wobei die beiden Geräte über ein Leistungstransferkabel zum Leistungstransfer einer elektrischen Leistung von der Leistungsquelle des ersten Gerätes zu der Leistungssenke des zweiten Gerätes miteinander verbunden sind,
wobei das Nutzdatensignal über parallele Stromleitungen des Leistungstransferkabels, die ein gleiches elektrisches Potential aufweisen, unbeeinflusst von einem gleichzeitig durchgeführten Leistungstransfer übertragen wird.

Bei einer möglichen Ausführungsform des erfindungsgemäßen Verfahrens wird das Nutzdatensignal in einem vorgegebenen Nutzdaten-Frequenzband von 2 bis 30 MHz übertragen.

Bei einer weiteren möglichen Ausführungsform des erfindungsgemäßen Verfahrens wird das Nutzdatensignal unidirektional oder bidirektional über mindestens zwei parallele Stromleitungen des Leistungstransferkabels, die ein gleiches elektrisches Potential aufweisen, während des Leistungstransfers übertragen.

Die Erfindung schafft ferner gemäß einem weiteren Aspekt ein Leistungstransferkabel zum Transfer einer elektrischen Leistung mit den in Patentanspruch 14 angegebenen Merkmalen.

Die Erfindung schafft demnach ein Leistungstransferkabel zum Transfer einer elektrischen Leistung von einer Leistungsquelle, insbesondere einer Schweißstromquelle, zu einer Leistungssenke, insbesondere einem Schweißbrenner, wobei das Leistungstransferkabel mindestens zwei Leitungspaare mit jeweils zwei parallelen Stromleitungen aufweist, wobei die beiden parallelen Stromleitungen jedes Leitungspaares bei dem Leistungstransfer das gleiche elektrische Potential aufweisen und an beiden Enden des Leistungstransferkabels miteinander galvanisch verbunden sind, wobei bei mindestens einem Leitungspaar an beiden Enden des Leistungstransferkabels jeweils ein Nutzdatenanschluss zum Anschluss eines Nutzdatenmodems vorgesehen ist, das zum Senden und/oder Empfangen eines über die beiden Stromleitungen des Leitungspaares übertragenen Nutzdatensignals geeignet ist.

Im Weiteren werden mögliche Ausführungsformen des erfindungsgemäßen Leistungsübertragungssystems und des erfindungsgemäßen Verfahrens zum Übertragen von Nutzdaten zwischen einer Leistungsquelle und einer Leistungssenke unter Bezugnahme auf die beigefügten Figuren näher erläutert.

Es zeigen:
- Fig. 1: ein Blockschaltbild zur Darstellung eines Ausführungsbeispiels eines erfindungsgemäßen Leistungsübertragungssystems;
- Fig. 2: ein Schaltungsdiagramm zur Darstellung eines Ausführungsbeispiels des erfindungsgemäßen Leistungsübertragungssystems;
- Fig. 3: ein weiteres Schaltungsdiagramm zur Darstellung eines weiteren Ausführungsbeispiels eines erfindungsgemäßen Leistungsübertragungssystems;
- Fig. 4: ein Schaltungsdiagramm zur Darstellung eines weiteren Ausführungsbeispiels eines erfindungsgemäßen Leistungsübertragungssystems;
- Figuren 5, 6, 7: verschiedene Anwendungsfälle eines erfindungsgemäßen Leistungsübertragungssystems;

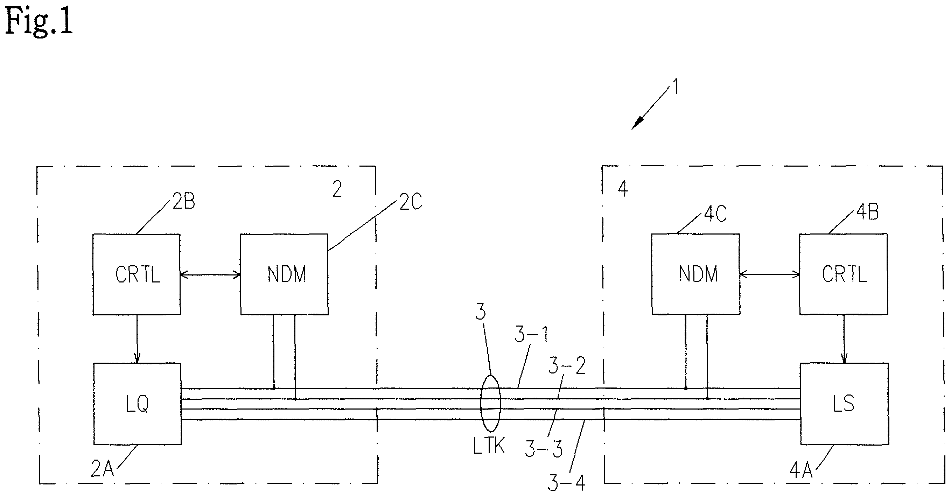

Wie man in Fig. 1 erkennen kann, umfasst ein Leistungsübertragungssystem 1 zur Leistungsübertragung einer elektrischen Leistung P bei dem dargestellten Ausführungsbeispiel ein erstes Gerät 2 mit einer darin integrierten Leistungsquelle 2A, die über ein Leistungstransferkabel 3 mit einer Leistungssenke 4A innerhalb eines zweiten Gerätes 4 des Leistungsübertragungssystems 1 verbunden ist. Bei dem ersten Gerät 2 handelt es sich bei einer möglichen Ausführungsform um ein Schweißgerät, das über eine Schweißstromquelle 2A als Leistungsquelle LQ verfügt. Diese Schweißstromquelle 2A überträgt einen elektrischen Schweißstrom an ein Drahtvorschubgerät 4A als Leistungssenke LS. An dem Drahtvorschubgerät 4A ist zur Durchführung eines Schweißprozesses ein Schweißbrenner angeschlossenen. Das Drahtvorschubgerät 4A weist bevorzugt eine Steuereinheit 4B auf. Die Steuerung 4B des zweiten Gerätes 4 ist an ein Nutzdatenmodem 4C zum Senden und/oder Empfangen eines Nutzdatensignals angeschlossen, wie in Fig. 1 dargestellt. Das erste Gerät 2, beispielsweise ein Schweißgerät, verfügt ebenfalls über eine interne Steuerung 2B, die mit einem Nutzdatenmodem 2C des ersten Gerätes 2 verbunden ist. Die beiden Nutzdatenmodems 2C, 4C der beiden über das Leistungstransferkabel 3 miteinander verbundenen Geräte 2, 4 können ein Nutzdatensignal in einem vorgegebenen Nutzdaten-Frequenzband senden oder empfangen. Wie in Fig. 1 angedeutet, verfügt das Leistungstransferkabel (LTK) 3 des erfindungsgemäßen Leistungsübertragungssystems 1 über zwei Leitungspaare mit jeweils zwei parallelen Stromleitungen, d.h. insgesamt über vier Stromleitungen 3-1, 3-2, 3-3, 3-4. Die ersten beiden Stromleitungen 3-1, 3-2 bilden ein erstes Leitungspaar und die zwei übrigen Stromleitungen 3-3, 3-4 bilden ein zweites Leitungspaar. Die Leistungsquelle 2A hat einen ersten elektrischen Pol mit einem ersten elektrischen Potential, der über die zwei parallelen Stromleitungen 3-1, 3-2 des ersten Leitungspaares innerhalb des Leistungstransferkabels 3 an einen ersten Pol der entfernten Leistungssenke 4A des zweiten Gerätes 4 angeschlossen ist. Die Leistungsquelle 2A hat ferner einen zweiten elektrischen Pol mit einem zweiten elektrischen Potential, der über die zwei weiteren parallelen Stromleitungen 3-3, 3-4 des zweiten Leitungspaares innerhalb des Leistungstransferkabels 3 an einen zweiten Pol der entfernten Leistungssenke 4A angeschlossen ist. Bei dem Leistungsübertragungssystem 1 kann während der Leistungsübertragung der elektrischen Leistung P von der Leistungsquelle 2A zu der Leistungssenke 4A gleichzeitig mithilfe der beiden Nutzdatenmodems 2C, 4C ein Nutzdatensignal zwischen den beiden Geräten 2, 4 über mindestens ein Leitungspaar mit Stromleitungen desselben elektrischen Potentials unbeeinflusst von dem Leistungstransfer übertragen werden. Die Datenübertragung ist dabei im Wesentlichen unabhängig von der Länge des Leistungsübertragungssystems 1, welche beispielsweise im Schiffsbau auch einige 10m betragen kann.

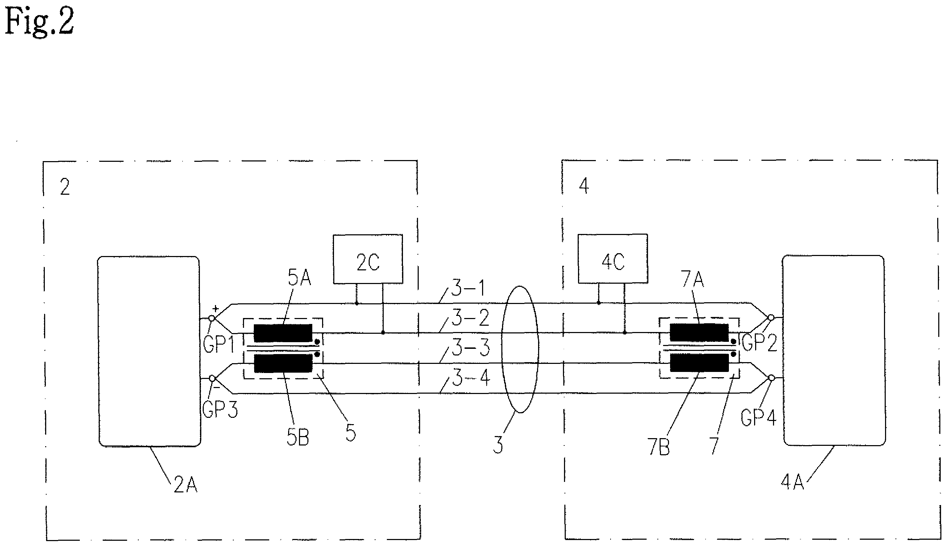

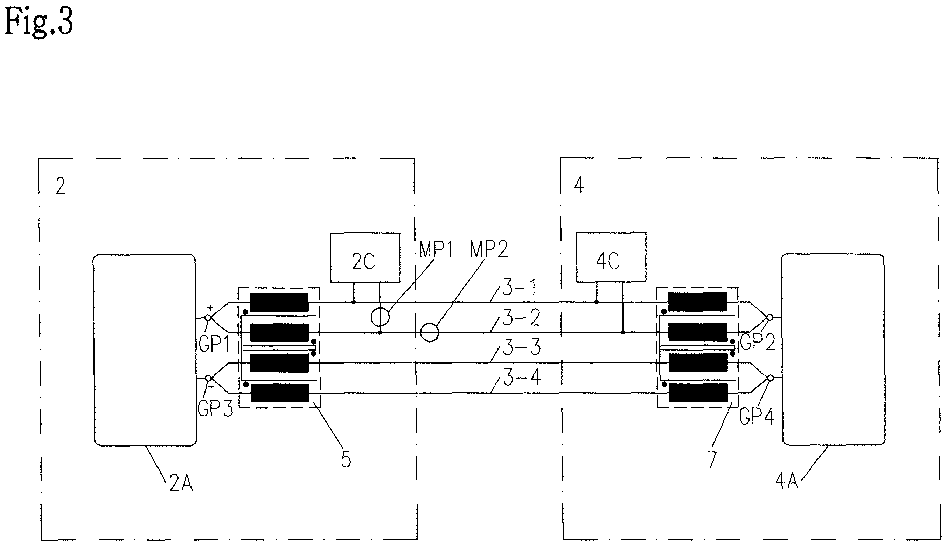

Bei dem in Fig. 1 dargestellten Ausführungsbeispiel wird das Nutzdatensignal zwischen dem ersten und dem zweiten Gerät 2, 4 über die Stromleitungen 3-1, 3-2 übertragen, die beide am ersten elektrischen Potential liegen. Durch die Einspeisung des Nutzdatensignals an Polen gleichen Potentials werden Gegentaktstörungen vermieden. Bei einer möglichen Ausführungsform erfolgt die Übertragung der Nutzdaten in einem vorgegebenen Nutzdaten-Frequenzband, das in einem Frequenzbereich von 2 MHz bis 30 MHz liegt. Bei einer möglichen Ausführungsform ist das Nutzdaten-Frequenzband in Unterfrequenzbereiche unterteilt, die selektiv zur Nutzdatenübertragung ausgewählt werden können. Bei dem in Fig. 1 dargestellten Ausführungsbeispiel sind die beiden Nutzdatenmodems 2C, 4C der beiden Geräte 2, 4 fest mit den beiden Stromleitungen 3-1, 3-2 des ersten Leitungspaares innerhalb des Leistungstransferkabels 3 verbunden. Bei einer weiteren möglichen Ausführungsform des erfindungsgemäßen Leistungsübertragungssystems 1 sind die beiden Nutzdatenmodems 2C, 4C an die Stromleitungen 3-i des Leistungstransferkabels 3 schaltbar. Das Zu- und Abschalten der Nutzdatenmodems kann durch eine interne Steuerung 2B, 4B des jeweiligen Gerätes 2, 4 gesteuert werden. Bei einer möglichen Ausführungsform des erfindungsgemäßen Leistungsübertragungssystems 1 erfolgt die Übertragung des Nutzdatensignals unidirektional von einem Gerät zu dem anderen Gerät. Bei einer alternativen Ausführungsform des erfindungsgemäßen Leistungsübertragungssystems 1 kann die Übertragung des Nutzdatensignals auch bidirektional zwischen den beiden Geräten 2, 4 erfolgen. Die unidirektionale oder bidirektionale Übertragung des Nutzdatensignals erfolgt in beiden Fällen über zwei parallele Stromleitungen eines Leitungspaares innerhalb des Leistungstransferkabels 3, die ein gleiches elektrisches Potential aufweisen. Die Datenkommunikation erfolgt somit über zwei Stromleitungen desselben Potentials. Dadurch werden Störungen der übertragenen Daten infolge eines gleichzeitig übertragenen transportierenden Stromes I, beispielsweise eines Schweißstromes, vermieden.
Damit das Nutzdatensignal nicht kurzgeschlossen wird, wird vorzugsweise an beiden Enden des Leistungstransferkabels 3 jeweils eine Drossel zur Entkopplung vorgesehen, wie im Zusammenhang mit den folgenden Figuren detailliert beschrieben wird. Bei dieser Drossel handelt es sich vorzugsweise um eine stromkompensierte Drossel, welche die Prozesseigenschaft nicht beeinträchtigt und das Nutzdatensignal von dem Verbindungspunkt entkoppelt. Bei einer möglichen Ausführungsform sind an beiden Enden des Leistungstransferkabels 3 eine stromkompensierte Drossel mit einem Ferritkern vorgesehen, beispielsweise die in Figur 2 dargestellten Drosseln 5, 7. Wie aus Fig. 3 ersichtlich, können an jedem Ende auch jeweils 2 Drosseln (5-1/5-2 sowie 7-1/7-2) angeordnet sein. Bei einer möglichen Ausführungsform ist der Ferritkern ein klappbarer Ferritkern, der auf die Stromleitungen ähnlich wie eine Manschette angebracht wird und diese umschließt. Bei einer möglichen Ausführungsform ist der angebrachte Ferritkern austauschbar. Die Drossel ist vorzugsweise derart ausgelegt, dass sie für den die elektrische Leistung P transportierenden Strom I, beispielsweise Schweißstrom, eine Stromkompensation ausführt, wohingegen sie für das Nutzdatensignal keine Stromkompensation herbeiführt. Die Drossel verhindert somit einen Kurzschluss des Nutzdatensignals an einem Gabelpunkt, an dem die beiden Stromleitungen eines Leitungspaares galvanisch miteinander verbunden bzw. galvanisch miteinander gekoppelt sind. Somit ergibt sich folgende Anordnung für das Leistungsübertragungssystem 1: Leistungsquelle, Drossel, Modem, Leistungstransferkabel, Modem, Drossel, Leistungssenke. Dabei kann Drossel und Modem entsprechend auch in der Leistungsquelle LQ bzw. Leistungssenke LS integriert sein. Die Drossel ist vorzugsweise als stromkompensierte Drossel ausgeführt, damit die Induktivität für die Ausführung des Schweißprozesses nicht zu hoch ist bzw. gering gehalten wird. Zum Abschalten der Leistungs- bzw. Stromquelle 2A ist die Induktivität L der Drossel ausreichend niedrig ausgelegt, damit der Schweißprozess nach erfolgter Abschaltung der Stromquelle möglichst schnell auf Seiten des Schweißbrenners beendet wird. Die Kurvenanstiegs- und Abstiegszeiten sind entsprechend gering, sodass die bei dem Schweißprozess erzeugte Schweißnaht eine hohe Qualität aufweist. Bei einer möglichen Ausführungsform werden die Nutzdaten kodiert und/oder verschlüsselt übertragen. Dabei ist auf Seiten beider Geräte 2, 4 jeweils eine Kodier-/Dekodiereinheit und/oder eine Verschlüsselungs-/Entschlüsselungseinheit vorgesehen.

Die Stromleitungen 3-i des Leistungstransferkabels 3 sind vorzugsweise derart ausgelegt, dass sie eine elektrische Leistung P von mindestens 1 KW von der Leistungsquelle 2A zu der Leistungssenke 4A übertragen können.

Fig. 2 zeigt ein Ausführungsbeispiel des erfindungsgemäßen Leistungsübertragungssystems 1 mit einem Schweißgerät 2, das über eine Schweißstromquelle 2A verfügt, welche über ein Stromleitungen umfassendes Leistungstransferkabel 3 mit einer Drahtvorschubeinheit verbunden ist. Die Leistungsquelle 2A des Schweißgerätes 2 besitzt einen ersten Pol (+) mit einem ersten elektrischen Potential, der über zwei parallele Stromleitungen 3-1, 3-2 eines ersten Leitungspaares des Leistungstransferkabels 3 an einen ersten Pol (+) der Leistungssenke 4A angeschlossen ist, und einen zweiten Pol (-), der ein zweites elektrisches Potential aufweist, der über zwei weitere parallele Stromleitungen 3-3, 3-4 eines zweiten Leitungspaares innerhalb des Leistungstransferkabels 3 an einen zweiten Pol (-) der Leistungssenke 4A angeschlossen ist. Wie man in Fig. 2 erkennen kann, ist an den beiden Stromleitungen 3-1, 3-2 des ersten Leitungspaares, die auf dem positiven elektrischen Potential (+) liegen, auf beiden Seiten ein Nutzdatenmodem 2C, 4C angeschlossen, die zur Übertragung des Nutzdatensignals dienen. Der erste Pol (+) der Leistungsquelle bzw. Schweißstromquelle 2A, der ein erstes elektrisches Potential aufweist, ist über einen ersten an einem ersten Ende des Leistungstransferkabels 3 vorhandenen ersten Gabelpunkt GP1 mit der ersten Stromleitung 3-1 des Leistungstransferkabels 3 und mit der zweiten Stromleitung 3-2 des Leistungstransferkabels 3 verbunden. Diese beiden Stromleitungen 3-1, 3-2 sind über einen an einem zweiten Ende des Leistungstransferkabels 3 vorhandenen zweiten Gabelpunkt GP2 mit dem ersten positiven Pol (+) der Leistungssenke 4A verbunden, wie in Fig. 2 dargestellt. In gleicher Weise ist der zweite negative Pol (-) der Leistungsquelle bzw. der Schweißstromquelle 2A, der ein zweites negatives elektrisches Potential (-) aufweist, über einen an dem ersten Ende des Leistungstransferkabels 3 vorhandenen dritten Gabelpunkt GP3 mit der dritten Stromleitung 3-3 und mit der vierten Stromleitung 3-4 des Leistungstransferkabels 3 galvanisch verbunden, die beide über einen an dem zweiten Ende des Leistungstransferkabels 3 vorhandenen vierten Gabelpunkt GP4 mit dem zweiten negativen Pol der Leistungssenke 4A verbunden sind. Das Lastkabelpotential wird doppelt geführt, sodass die Einspeisung einer Power Line Communication, PLC, erfolgt über zwei Schweißstromleitungen 3-1, 3-2 desselben Potentials. Wie man in Fig. 2 erkennen kann, liegen die beiden ersten Stromleitungen 3-1, 3-2 auf einem positiven elektrischen Potential (+) und die beiden übrigen elektrischen Stromleitungen 3-3, 3-4 auf einem negativen elektrischen Potential (-). Bei dem in Fig. 2 dargestellten Ausführungsbeispiel ist an dem ersten Ende des Leistungstransferkabels 3 eine erste stromkompensierte Drossel 5 vorgesehen und an dem zweiten Ende des Leistungstransferkabels 3 eine zweite stromkompensierte Drossel 7. Die erste stromkompensierte Drossel 5 verfügt über zwei Wicklungen 5A, 5B, wobei die erste Wicklung 5A an der zweiten Stromleitung 3-2 und die zweite Wicklung 5B an der dritten Stromleitung 3-3 vorgesehen ist. In gleicher Weise verfügt die an dem anderen Ende des Leistungstransferkabels 3 angebrachte zweite Drossel 7 über eine erste Wicklung 7A und eine zweite Wicklung 7B. Die erste Wicklung 7A der zweiten Drossel 7 ist an der zweiten Stromleitung 3-2 vorgesehen und die zweite Wicklung 7B der zweiten Drossel 7 ist an der dritten Stromleitung 3-3 des Leistungstransferkabels 3 vorgesehen. Beide Drosseln 5, 7 kompensieren somit die Magnetfelder, welche durch den hin- und zurückfließenden Leistungstransferstrom, insbesondere einen Schweißstrom, entstehen. Durch die stromkompensierten Drosseln 5, 7 wird ein Kurzschluss des Nutzdatensignals verhindert. Die Drosseln 5, 7 blockieren das HF-Signal. Die Verwendung der stromkompensierten Drosseln 5, 7 beeinträchtigt zudem nicht den Leistungstransfer und/oder den Schweißprozess selbst.

Fig. 3 zeigt eine weitere Ausführungsvariante des erfindungsgemäßen Leistungsübertragungssystems 1, bei dem beide Polpaare kompensiert werden. Die in Fig. 3 dargestellte Ausführungsform zeichnet sich durch ihren symmetrischen Aufbau aus. In diesem Fall bestimmt die Anzahl der Stromleitungen die Anzahl der stromkompensierten Drosseln. Dementsprechend besteht bei dem in Fig. 3 dargestellten Ausführungsbeispiel die Drossel 5 aus zwei Drosseln 5-1 und 5-2 auf der Seite der Leistungsquelle LQ und die Drossel 7 aus zwei Drosseln 7-1 und 7-2 auf der Seite der Leistungssenke LS angeordnet. Die Drosseln 5-1, 5-2, 7-1 und 7-2 sind entsprechend anhand der dargestellten Ferritkerne erkennbar. Daraus resultiert, dass an jedem Ende der Stromleitung eine Wicklung angeordnet ist. Bei den beiden in den Figuren 2, 3 dargestellten Ausführungsvarianten können mithilfe der beiden Nutzdatenmodems 2C, 4C Nutzdaten zwischen dem Schweißgerät 2 und dem Drahtvorschubgerät übertragen werden. Auf diese Weise ist es möglich, während des Leistungstransfers bzw. während des fließenden Schweißstromes gleichzeitig ein Nutzdatensignal von dem Schweißgerät 2 zu dem Drahtvorschubgerät oder umgekehrt von dem Drahtvorschubgerät zurück zu dem Schweißgerät 2 zu übertragen. Dabei werden Nutzsignale in einem Breitbandfrequenzbereich, BBFB, von vorzugsweise 2 bis 30 MHz uni- oder bidirektional bzw. half duplex bzw. full duplex übertragen. Bei einer möglichen Ausführungsform ist der vorgesehene Nutzdatenfrequenzbereich in Unterfrequenzbänder unterteilt, die selektiv als Datenübertragungskanäle verwendet werden können. Auf diese Weise ist es möglich, unterschiedliche Prozessparameter, PP, zur Steuerung des Schweißprozesses über das Leistungstransferkabel 3 serielle zu übertragen. Darüber hinaus können in anderen Datenübertragungskanälen bzw. Frequenzbändern Sensordaten, SD, die auf Seiten des Schweißbrenners durch Sensoren gewonnen werden, zu der Steuerung 2B des Schweißgerätes 2 übertragen werden, um eine Rückkopplung über den Fortgang des Schweißprozesses zu liefern. Es ist somit während des fortlaufenden Schweißprozesses möglich, Steuersignale bzw. Schweißparametereinstellungen von dem Schweißgerät 2 hin zu dem Drahtvorschubgerät 4, zu übertragen. Bei einer möglichen Ausführungsform erfolgt die Datenkommunikation bzw. Datenübertragung bidirektional, sodass während der Übertragung der Steuerdaten von dem Schweißgerät 2 zu dem Schweißbrenner 4 verschiedene Sensorsignale bzw. Sensordaten, SD, zur Steuerung 2B, übertragen werden können. Die übertragenen Nutzdaten werden durch den gleichzeitig übertragenen Schweißstrom I nicht gestört bzw. beeinträchtigt. Dies ist vor allem deshalb der Fall, weil die Nutzdaten auf gleichpoligen Leitungen mit identischen Störpegeln übertragen werden, wodurch Störungen für die Modems nicht sichtbar sind. Dementsprechend ist der Signal-Rausch-Abstand um ein Vielfaches höher, als wenn die Nutzdaten auf nicht gleichpoligen Leitungen übertragen werden würden.

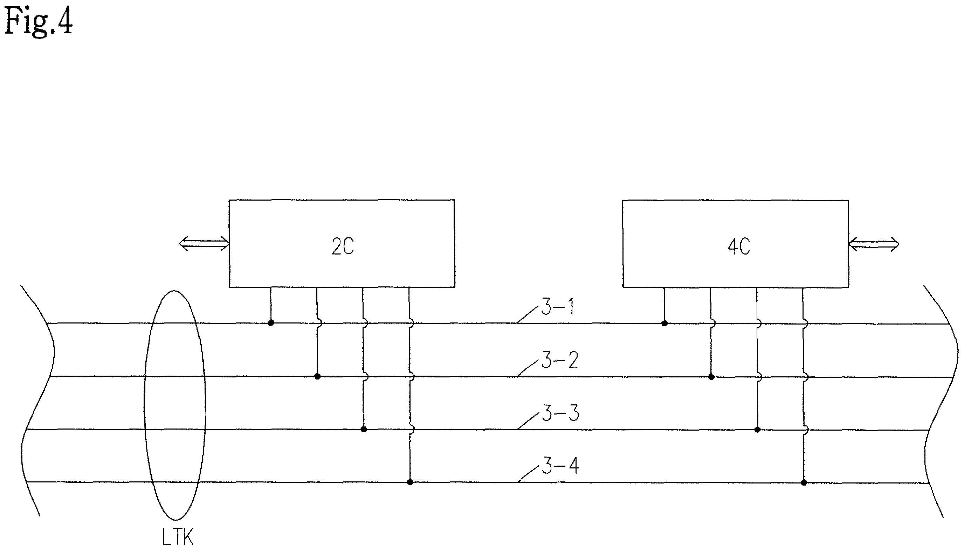

Fig. 4 zeigt eine weitere Ausführungsvariante des erfindungsgemäßen Leistungsübertragungssystems 1. Bei dem dargestellten Ausführungsbeispiel sind die beiden Nutzdatenmodems 2C, 4C an beide Leitungspaare angeschlossen. Beide Nutzdatenmodems 2C, 4C sind an das erste Leitungspaar mit den beiden Stromleitungen 3-1, 3-2 und an das zweite Leitungspaar mit den beiden Stromleitungen 3-3, 3-4 angeschlossen. Da bei dieser Ausführungsform beide Leitungspaare zur Datenübertragung genutzt werden können, wird der Umfang der übertragenen Nutzdaten gesteigert.

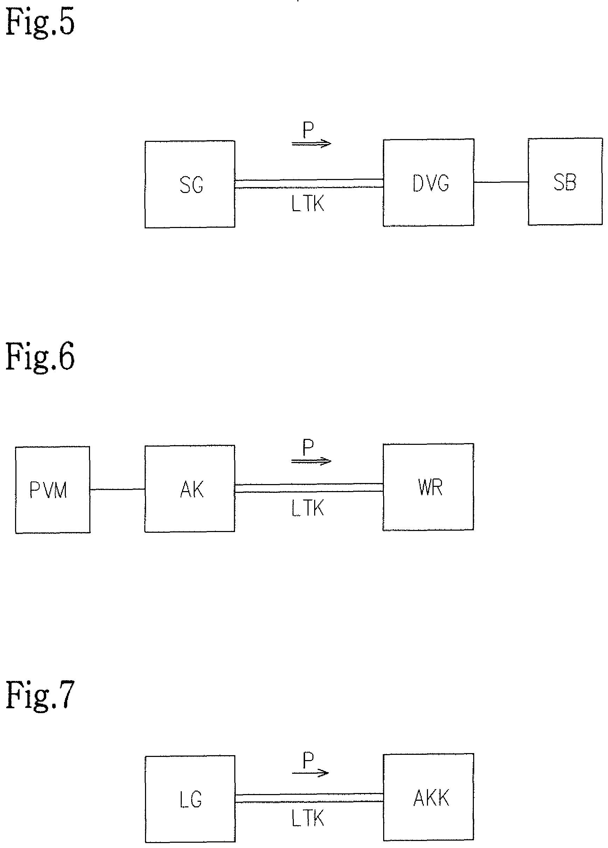

Figuren 5, 6, 7 zeigen schematisch verschiedene Anwendungsbeispiele für das erfindungsgemäße Leistungsübertragungssystem 1. Bei dem in Fig. 5 dargestellten Ausführungsbeispiel wird über ein Leistungstransferkabel, LTK, 3 elektrische Leistung P von einem Schweißgerät, SG, an ein Drahtvorschubgerät DVG, an welchem ein Schweißbrenner SB angeschlossen ist, übertragen. Das Leistungstransferkabel 3 weist bei einer möglichen Ausführungsform vier Stromleitungen auf. Das Leistungstransferkabel 3 besitzt dabei zwei Leitungspaare mit jeweils zwei Stromleitungen, die auf gleichem elektrischem Potential liegen. Die Datenübertragung der Nutzdaten erfolgt dabei während der Leistungsübertragung über Stromleitungen desselben elektrischen Potentials, sodass sie bei der Leistungsübertragung unbeeinflusst bleiben.

Fig. 6 zeigt als weiteren Anwendungsfall als Leistungsquelle ein Photovoltaikmodul PVM, welches mit einer Anschlusskomponente AK in der Leistungsquelle verbunden ist, wobei die Anschlusskomponente AK über ein Leistungstransferkabel, LTK, 3 mit einem Wechselrichter WR der Photovoltaikanlage PVM verbunden ist. Das Photovoltaikmodul PVM überträgt eine elektrische Leistung P über das Leistungstransferkabel 3 zu dem Wechselrichter WR, der den empfangenen Gleichstrom in einen Wechselstrom umwandeln kann.

Fig. 7 zeigt als weiteren Anwendungsfall die Leistungsübertragung von einem Ladegerät LG als Leistungsquelle hin zu einem Akkumulator AKK als Leistungssenke über ein Leistungstransferkabel, LTK, 3. Bei allen Anwendungsfällen, wie sie in den Figuren 5, 6, 7 schematisch dargestellt sind, können die beiden über das Leistungstransferkabel 3 miteinander verbundenen Geräte während des Leistungstransfers der elektrischen Leistung P miteinander uni- oder bidirektional kommunizieren. Bidirektional umfasst hierbei sowohl full duplex als auch half duplex. Bei dem erfindungsgemäßen Leistungstransferkabel 3 sind vorzugsweise zwei Leitungspaare mit jeweils zwei Stromleitungen vorgesehen. Bei alternativen Ausführungsformen des erfindungsgemäßen Leistungstransferkabels 3 können noch weitere Leitungspaare vorgesehen werden. Jedes Leitungspaar besteht dabei aus zwei Stromübertragungsleitungen, die beim Leistungstransfer auf gleichem elektrischem Potential liegen. Bei einer möglichen Ausführungsform des erfindungsgemäßen Leistungstransferkabels 3 können an beiden Enden des Leistungstransferkabels 3 Datenanschlüsse zum Anschluss eines Nutzdatenmodems 2C, 4C vorgesehen werden. Bei einer weiteren möglichen Ausführungsform des erfindungsgemäßen Leistungstransferkabels 3 können die beiden Nutzdatenmodems 2C, 4C auch an den Enden des Leistungstransferkabels 3 integriert sein und über eine Nutzdatenschnittstelle mit einem Gerät verbunden werden, welches über eine Leistungsquelle bzw. eine Leistungssenke verfügt. Bei dieser Ausführungsform verfügt das Leistungstransferkabel 3 über eine Stromschnittstelle zum Anschluss an die Leistungsquelle bzw. Leistungssenke des Gerätes sowie über eine Datenschnittstelle zum Anschluss an eine Steuereinheit des jeweiligen Gerätes. Das Leistungstransferkabel 3 weist vorzugsweise einen Schutzmantel auf, in dem die verschiedenen Leitungspaare enthalten sind. Der Schutzmantel des Leistungstransferkabels 3 kann zusätzlich vorzugsweise geschirmt sein.

## Patentansprüche

1. Leistungsübertragungssystem (1) zur Leistungsübertragung einer elektrischen Leistung (P) von einer Leistungsquelle (2A) zu einer Leistungssenke (4A) über ein Leistungstransferkabel (3),
wobei die Leistungsquelle (2A) und die Leistungssenke (4A) jeweils einen ersten Pol mit einem ersten elektrischen Potential und einen zweiten Pol mit einem zweiten elektrischen Potential aufweisen,
wobei die ersten Pole über parallele Stromleitungen (3-1, 3-2) eines ersten Leitungspaares aus einer ersten Stromleitung (3-1) und einer zweiten Stromleitung (3-2) verbunden sind, und
wobei während der Leistungsübertragung über die Stromleitungen ein Nutzdatensignal zwischen der Leistungsquelle (2A) und der Leistungssenke (4A) über mindestens ein Leitungspaar mit Stromleitungen (3-1, 3-2, 3-3, 3-4) desselben elektrischen Potentials übertragbar ist,
**dadurch gekennzeichnet,**
**dass** die zweiten Pole über parallele Stromleitungen (3-3, 3-4) eines zweiten Leitungspaares aus einer dritten Stromleitung (3-3) und einer vierten Stromleitung 3-4) verbunden sind,
**dass** an einem ersten Ende des Leistungstransferkabels (3) eine erste stromkompensierte Drossel (5) mit einer ersten Wicklung (5A) und einer zweiten Wicklung (5B) zur Entkopplung vorgesehen ist und
**dass** an einem zweiten Ende des Leistungstransferkabels (3) eine zweite stromkompensierte Drossel (7) mit einer ersten Wicklung (7A) und einer zweiten Wicklung (7B) zur Entkopplung vorgesehen ist,
wobei die erste Wicklung (5A) der ersten Drossel (5A) und die erste Wicklung (7A) der zweiten Drossel (7) an der zweiten Stromleitung (3-2) vorgesehen sind und
wobei die zweite Wicklung (5B) der ersten Drossel (5A) und die zweite Wicklung (7B) der zweiten Drossel (7) an der dritten Stromleitung (3-3) des Leistungstransferkabels (3) vorgesehen sind.

2. Leistungsübertragungssystem nach Anspruch 1,
wobei das Leistungstransferkabel (3) sowohl auf Seite der Leistungsquelle (2A) als auch auf Seite der Leistungssenke (4A) ein an die Stromleitungen angeschlossenes oder schaltbares Nutzdatenmodem (2C, 4C) aufweist, das zum Senden und/oder Empfangen eines Nutzdatensignals in einem vorgegebenen Nutzdaten-Frequenzband vorgesehen ist.

3. Leistungsübertragungssystem nach Anspruch 2,
wobei das Nutzdaten-Frequenzband für das über die Stromleitungen desselben elektrischen Potentials übertragene Nutzdatensignal in einem Frequenzbereich von 2 MHz bis 30 MHz liegt.

4. Leistungsübertragungssystem nach einem der vorangehenden Ansprüche 1 bis 3,
wobei der erste Pol der Leistungsquelle (2A), der ein erstes elektrisches Potential aufweist, über einen an dem ersten Ende des Leistungstransferkabels (3) vorhandenen ersten Gabelpunkt (GP1) mit der ersten Stromleitung (3-1) des Leistungstransferkabels (3) und mit der zweiten Stromleitung (3-2) des Leistungstransferkabels (3) verbunden ist, die beide über einen an dem zweiten Ende des Leistungstransferkabels (3) vorhandenen zweiten Gabelpunkt (GP2) mit dem ersten Pol der Leistungssenke (4A) verbunden sind, und wobei der zweite Pol der Leistungsquelle (2A), der ein zweites elektrisches Potential aufweist, über einen an dem ersten Ende des Leistungstransferkabels (3) vorhandenen dritten Gabelpunkt (GP3) mit der dritten Stromleitung (3-3) des Leistungstransferkabels (3) und mit der vierten Stromleitung (3-4) des Leistungstransferkabels (3) verbunden ist, die beide über einen an dem zweiten Ende des Leistungstransferkabels (3) vorhandenen vierten Gabelpunkt (GP4) mit dem zweiten Pol der Leistungssenke (4A) verbunden sind.

5. Leistungsübertragungssystem nach einem der vorangehenden Ansprüche 1 bis 4,
wobei die Stromleitungen des Leistungstransferkabels (3) ausgelegt sind, jeweils eine elektrische Leistung von mindestens einem 1 KW zu übertragen.

6. Leistungsübertragungssystem nach einem der vorangehenden Ansprüche 1 bis 5,
wobei die Leistungsquelle (2A) eine Schweißstromquelle eines Schweißgerätes (2) ist, die über die Stromleitungen des Leistungstransferkabels (3) einen Schweißstrom an ein Drahtvorschubgerät als Leistungssenke (4A) überträgt.

7. Leistungsübertragungssystem nach Anspruch 6,
wobei die Nutzdatenmodems (4C, 2C) zur Übertragung eines Nutzdatensignals an einer Steuerung (2B, 4B) angeschlossen sind.

8. Leistungsübertragungssystem nach einem der vorangehenden Ansprüche 1 bis 5,
wobei die Leistungsquelle ein Photovoltaikmodul (PVM) einer Photovoltaikanlage ist, das über die Stromleitungen des Leistungstransferkabels (3) einen elektrischen Gleichstrom an einen Wechselrichter (WR) der Photovoltaikanlage überträgt.

9. Leistungsübertragungssystem nach einem der vorangehenden Ansprüche 1 bis 5,
wobei die Leistungsquelle ein Ladegerät (LG) ist, das über die Stromleitungen des Leistungstransferkabels (3) einen Ladestrom an einen aufladbaren Akkumulator (AKK) als Leistungssenke überträgt.

10. Leistungsübertragungssystem nach einem der vorangehenden Ansprüche 1 bis 5,
mit einer weiteren stromkompensierten Drossel an dem ersten Ende des Leistungsübertragungskabels (3) mit einer ersten Wicklung, welche an der ersten Stromleitung (3-1) vorgesehen ist und mit einer zweiten Wicklung, welche an der vierten Stromleitung (3-4) vorgesehen ist; und
mit noch einer weiteren stromkompensierten Drossel an dem zweiten Ende des Leistungsübertragungskabels (3) mit einer ersten Wicklung, welche an der ersten Stromleitung (3-1) vorgesehen ist und mit einer zweiten Wicklung, welche an der vierten Stromleitung (3-4) vorgesehen ist.

11. Verfahren zum Übertragen eines Nutzdatensignals zwischen einem ersten Gerät (2), das eine Leistungsquelle (2A) aufweist, und einem zweiten Gerät (4), das eine Leistungssenke (4A) aufweist,
**dadurch gekennzeichnet,**
**dass** ein Leistungsübertragungssystem (1) nach einem der Ansprüche 1 bis 10 verwendet wird.

12. Verfahren nach Anspruch 11,
wobei das Nutzdatensignal in einem vorgegebenen Nutzdaten-Frequenzband von 2 bis 30 MHz übertragen wird.

13. Verfahren nach Anspruch 11 oder 12,
wobei das Nutzdatensignal unidirektional oder bidirektional über mindestens zwei parallele Stromleitungen des Leistungstransferkabels (3), die ein gleiches elektrisches Potential aufweisen, übertragen wird.

14. Leistungstransferkabel (3) zum Transfer einer elektrischen Leistung (P) von einer Leistungsquelle (2A) hin zu einer Leistungssenke (4A),
wobei das Leistungstransferkabel (3) mindestens ein erstes Leitungspaar mit zwei parallelen Stromleitungen (3-1, 3-2), nämlich einer ersten Stromleitung (3-1) und einer zweiten Stromleitung (3-2), aufweist,
wobei die beiden parallelen Stromleitungen jedes Leitungspaares bei dem Leistungstransfer das gleiche elektrische Potential aufweisen und an beiden Enden des Leistungstransferkabels (3) miteinander galvanisch verbunden sind,
wobei bei mindestens einem Leitungspaar an beiden Enden des Leistungstransferkabels (3) jeweils ein Nutzdatenanschluss zum Anschluss eines Nutzdatenmodems (2C, 4C) vorgesehen ist, das zum Senden und/oder Empfangen eines über die beiden Stromleitungen des Leitungspaares übertragenen Nutzdatensignals geeignet ist,
**dadurch gekennzeichnet,**
**dass** das Leistungstransferkabel (3) mindestens ein zweites Leitungspaar mit zwei parallelen Stromleitungen (3-3, 3-3), nämlich einer dritten Stromleitung (3-3) und einer vierten Stromleitung (3-4), aufweist,
**dass** an einem ersten Ende des Leistungstransferkabels (3) eine erste stromkompensierte Drossel (5) mit einer ersten Wicklung (5A) und einer zweiten Wicklung (5B) zur Entkopplung vorgesehen ist und
**dass** an einem zweiten Ende des Leistungstransferkabels (3) eine zweite stromkompensierte Drossel (7) mit einer ersten Wicklung (7A) und einer zweiten Wicklung (7B) zur Entkopplung vorgesehen ist,
wobei die erste Wicklung (5A) der ersten Drossel (5A) und die erste Wicklung (7A) der zweiten Drossel (7) an der zweiten Stromleitung (3-2) vorgesehen sind und
wobei die zweite Wicklung (5B) der ersten Drossel (5A) und die zweite Wicklung (7B) der zweiten Drossel (7) an der dritten Stromleitung (3-3) des Leistungstransferkabels (3) vorgesehen sind.

15. Leistungstransferkabel nach Anspruch 14, **dadurch gekennzeichnet, dass** die Leistungsquelle (2A) eine Schweißstromquelle ist und dass die Leistungssenke (4A) ein Schweißbrenner ist.

## Claims

1. Power transmission system (1) for power transmission of electrical power (P) from a power source (2A) to a power sink (4A) via a power transfer cable (3),
wherein the power source (2A) and the power sink (4A) each comprise a first pole having a first electric potential and a second pole having a second electric potential,
wherein the first poles are connected via parallel power lines (3-1, 3-2) of a first line pair formed by a first power line (3-1) and a second power line (3-2), and
wherein, during the power transmission via the power lines, a user data signal can be transmitted between the power source (2A) and the power sink (4A) via at least one line pair having power lines (3-1, 3-2, 3-3, 3-4) of the same electric potential,
**characterised in that**
the second poles are connected via parallel power lines (3-3, 3-4) of a second line pair formed by a third power line (3-3) and a fourth power line (3-4),
that, at a first end of the power transfer cable (3), a first current-compensated choke (5) having a first winding (5A) and a second winding (5B) is provided for decoupling purposes and
that, at a second end of the power transfer cable (3), a second current-compensated choke (7) having a first winding (7A) and a second winding (7B) is provided for decoupling purposes,
wherein the first winding (5A) of the first choke (5A) and the first winding (7A) of the second choke (7) are provided on the second power line (3-2) and
wherein the second winding (5B) of the first choke (5A) and the second winding (7B) of the second choke (7) are provided on the third power line (3-3) of the power transfer cable (3).

2. Power transmission system as claimed in claim 1,
wherein, both for the power source (2A) and also for the power sink (4A), the power transfer cable (3) comprises a user data modem (2C, 4C), which is attached or can be connected to the power lines and is provided to transmit and/or receive a user data signal in a preset user data frequency band.

3. Power transmission system as claimed in claim 2,
wherein the user data frequency band for the user data signal, which is transmitted via the power lines of the same electric potential, is in a frequency range of 2 MHz to 30 MHz.

4. Power transmission system as claimed in any one of the preceding claims 1 to 3,
wherein the first pole of the power source (2A), which has a first electric potential, is connected via a first bifurcation point (GP1), which is provided at the first end of the power transfer cable (3), to the first power line (3-1) of the power transfer cable (3) and to the second power line (3-2) of the power transfer cable (3) which are both connected via a second bifurcation point (GP2), which is provided at the second end of the power transfer cable (3), to the first pole of the power sink (4A), and wherein the second pole of the power source (2A), which has a second electric potential, is connected via a third bifurcation point (GP3), which is provided at the first end of the power transfer cable (3), to the third power line (3-3) of the power transfer cable (3) and to the fourth power line (3-4) of the power transfer cable (3) which are both connected via a fourth bifurcation point (GP4), which is provided at the second end of the power transfer cable (3), to the second pole of the power sink (4A).

5. Power transmission system as claimed in any one of the preceding claims 1 to 4,
wherein the power lines of the power transfer cable (3) are designed each to transmit electrical power of at least 1 KW.

6. Power transmission system as claimed in any one of the preceding claims 1 to 5,
wherein the power source (2A) is a welding current source of a welding device (2), which, via the power lines of the power transfer cable (3), transmits a welding current to a wire feed device as a power sink (4A).

7. Power transmission system as claimed in claim 6,
wherein the user data modems (4C, 2C) are attached to a controller (2B, 4B) in order to transmit a user data signal.

8. Power transmission system as claimed in any one of the preceding claims 1 to 5,
wherein the power source is a photovoltaic module (PVM) of a photovoltaic system, which, via the power lines of the power transfer cable (3), transmits an electric direct current to a power inverter (WR) of the photovoltaic system.

9. Power transmission system as claimed in any one of the preceding claims 1 to 5,
wherein the power source is a charging device (LG) which, via the power lines of the power transfer cable (3), transmits a charging current to a chargeable accumulator (AKK) as a power sink.

10. Power transmission system as claimed in any one of the preceding claims 1 to 5,
having a further current-compensated choke at the first end of the power transmission cable (3) with a first winding which is provided on the first power line (3-1) and with a second winding which is provided on the fourth power line (3-4); and also having a further current-compensated choke at the second end of the power transmission cable (3) having a first winding, which is provided on the first power line (3-1), and having a second winding which is provided on the fourth power line (3-4).

11. Method of transmitting a user data signal between a first device (2), which comprises a power source (2A), and a second device (4), which comprises a power sink (4A), **characterised in that**
a power transmission system (1) as claimed in any one of claims 1 to 10 is used.

12. Method as claimed in claim 11,
wherein the user data signal is transmitted in a preset user data frequency band of 2 to 30 MHz.

13. Method as claimed in claim 11 or 12,
wherein the user data signal is transmitted unidirectionally or bidirectionally via at least two parallel power lines of the power transfer cable (3) which have the same electric potential.

14. Power transfer cable (3) for the transfer of electrical power (P) from a power source (2A) to a power sink (4A), wherein the power transfer cable (3) comprises at least one first line pair having two parallel power lines (3-1, 3-2), namely a first power line (3-1) and a second power line (3-2),
wherein the two parallel power lines of each line pair have the same electric potential during the power transfer and are DC-connected to each other at both ends of the power transfer cable (3),
wherein, in the case of at least one line pair, at both ends of the power transfer cable (3), a respective user data connection is provided for the connection of a user data modem (2C, 4C) which is suitable for transmitting and/or receiving a user data signal transmitted via the two power lines of the line pair,
**characterised in that**
the power transfer cable (3) comprises at least one second line pair having two parallel power lines (3-3, **3-4**), namely a third power line (3-3) and a fourth power line (3-4),
that, at a first end of the power transfer cable (3), a first current-compensated choke (5) having a first winding (5A) and a second winding (5B) is provided for decoupling purposes and
that, at a second end of the power transfer cable (3), a second current-compensated choke (7) having a first winding (7A) and a second winding (7B) is provided for decoupling purposes,
wherein the first winding (5A) of the first choke (5A) and the first winding (7A) of the second choke (7) are provided on the second power line (3-2) and
wherein the second winding (5B) of the first choke (5A) and the second winding (7B) of the second choke (7) are provided on the third power line (3-3) of the power transfer cable (3).

15. Power transfer cable as claimed in claim 14, **characterised in that** the power source (2A) is a welding current source and that the power sink (4A) is a welding torch.

## Revendications

1. Système de transmission de puissance (1) destiné à transmettre une puissance électrique (P) d'une source de puissance (2A) à un récepteur de puissance (4A) par le biais d'un câble de transmission de puissance (3),
la source de puissance (2A) et le récepteur de puissance (4A) comportant chacun un premier pôle avec un premier potentiel électrique et un second pôle avec un second potentiel électrique,
les premiers pôles étant reliés par le biais des lignes électriques (3-1, 3-2) parallèles d'une première paire de lignes constituée d'une première ligne électrique (3-1) et d'une deuxième ligne électrique (3-2), et
pendant la transmission de puissance par le biais de lignes électriques, un signal de données utiles pouvant être transmis entre la source de puissance (2A) et le récepteur de puissance (4A) par le biais d'au moins une paire de lignes avec des lignes électriques (3-1, 3-2, 3-3, 3-4) du même potentiel électrique,
**caractérisé en ce que**
les seconds pôles sont reliés par le biais de lignes électriques (3-3, 3-4) parallèles d'une seconde paire de lignes constituée d'une troisième ligne électrique (3-3) et d'une quatrième ligne électrique (3-4),
**en ce que**, à une première extrémité du câble de transmission de puissance (3), une première bobine d'inductance à courant compensé (5) dotée d'un premier enroulement (5A) et d'un second enroulement (5B) est prévue pour le découplage et
**en ce que**, à une seconde extrémité du câble de transmission de puissance (3), une seconde bobine d'inductance à courant compensé (7) dotée d'un premier enroulement (7A) et d'un second enroulement (7B) est prévue pour le découplage,
le premier enroulement (5A) de la première bobine d'inductance (5A) et le premier enroulement (7A) de la seconde bobine d'inductance (7) étant prévus sur la deuxième ligne électrique (3-2) et le second enroulement (5B) de la première bobine d'inductance (5A) et le second enroulement (7B) de la seconde bobine d'inductance (7) étant prévus sur la troisième ligne électrique (3-3) du câble de transmission de puissance (3).

2. Système de transmission de puissance selon la revendication 1,
dans lequel le câble de transmission de puissance (3) comporte, tant du côté de la source de puissance (2A) que du côté du récepteur de puissance (4A), un modem de données utiles (2C, 4C) raccordé aux lignes électriques ou pouvant être commuté sur celles-ci, qui est prévu pour envoyer et/ou recevoir un signal de données utiles dans une bande de fréquences de données utiles prédéfinie.

3. Système de transmission de puissance selon la revendication 2,
dans lequel la bande de fréquences de données utiles pour le signal de données utiles transmis par le biais des lignes électriques du même potentiel électrique se trouve dans une plage de fréquences de 2 MHz à 30 MHz.

4. Système de transmission de puissance selon l'une des revendications précédentes 1 à 3,
dans lequel le premier pôle de la source de puissance (2A), qui comporte un premier potentiel électrique, est relié, par le biais d'un premier point de bifurcation (GP1) situé à la première extrémité du câble de transmission de puissance (3), à la première ligne électrique (3-1) du câble de transmission de puissance (3) et à la deuxième ligne électrique (3-2) du câble de transmission de puissance (3), qui sont toutes les deux reliées au premier pôle du récepteur de puissance (4A) par le biais d'un second point de bifurcation (GP2) situé à la seconde extrémité du câble de transmission de puissance (3), et le second pôle de la source de puissance (2A), qui comporte un second potentiel électrique, étant relié, par le biais d'un troisième point de bifurcation (GP3) situé à la première extrémité du câble de transmission de puissance (3), à la troisième ligne électrique (3-3) du câble de transmission de puissance (3) et à la quatrième ligne électrique (3-4) du câble de transmission de puissance (3), qui sont toutes les deux reliées, par le biais d'un quatrième point de bifurcation (GP4) situé à la seconde extrémité du câble de transmission de puissance (3), au second pôle du récepteur de puissance (4A).

5. Système de transmission de puissance selon l'une des revendications précédentes 1 à 4,
dans lequel les lignes électriques du câble de transmission de puissance (3) sont conçues pour transmettre respectivement une puissance électrique d'au moins 1 kW.

6. Système de transmission de puissance selon l'une des revendications précédentes 1 à 5,
dans lequel la source de puissance (2A) est une source de courant de soudage d'un appareil de soudage (2), qui transmet un courant de soudage à un dévidoir faisant office de récepteur de puissance (4A) par le biais des lignes électriques du câble de transmission de puissance (3).

7. Système de transmission de puissance selon la revendication 6,
dans lequel le modem de données utiles (4C, 2C) pour la transmission d'un signal de données utiles est raccordé à une commande (2B, 4B).

8. Système de transmission de puissance selon l'une des revendications précédentes 1 à 5,
dans lequel la source de puissance est un module photovoltaïque (PVM) d'une installation photovoltaïque, qui transmet un courant électrique continu à un onduleur (WR) de l'installation photovoltaïque par le biais des lignes électriques du câble de transmission de puissance (3).

9. Système de transmission de puissance selon l'une des revendications précédentes 1 à 5,
dans lequel la source de puissance est un chargeur (LG), qui transmet un courant de charge à un accumulateur (AKK) rechargeable faisant office de récepteur de puissance par le biais des lignes électriques du câble de transmission de puissance (3).

10. Système de transmission de puissance selon l'une des revendications précédentes 1 à 5,
comprenant une autre bobine d'inductance à courant compensé à la première extrémité du câble de transmission de puissance (3) dotée d'un premier enroulement, qui est prévu sur la première ligne électrique (3-1), et d'un second enroulement, qui est prévu sur la quatrième ligne électrique (3-4) ; et
comprenant encore une autre bobine d'inductance à courant compensé à la seconde extrémité du câble de transmission de puissance (3) dotée d'un premier enroulement, qui est prévu sur la première ligne électrique (3-1), et d'un second enroulement, qui est prévu sur la quatrième ligne électrique (3-4).

11. Procédé de transmission d'un signal de données utiles entre un premier appareil (2), qui comporte une source de puissance (2A), et un second appareil (4), qui comporte un récepteur de puissance (4A),
**caractérisé en ce que**
un système de transmission de puissance (1) selon l'une des revendications 1 à 10 est utilisé.

12. Procédé selon la revendication 11,
dans lequel le signal de données utiles est transmis dans une bande de fréquences de données utiles prédéfinie de 2 à 30 MHz.

13. Procédé selon la revendication 11 ou 12,
dans lequel le signal de données utiles est transmis de manière unidirectionnelle ou bidirectionnelle par le biais d'au moins deux lignes électriques parallèles du câble de transmission de puissance (3), qui présentent un même potentiel électrique.

14. Câble de transmission de puissance (3) destiné transmettre une puissance électrique (P) d'une source de puissance (2A) à un récepteur de puissance (4A),
le câble de transmission de puissance (3) comportant au moins une première paire de lignes constituée de deux lignes électriques (3-1, 3-2) parallèles, à savoir une première ligne électrique (3-1) et une deuxième ligne électrique (3-2),
les deux lignes électriques parallèles de chaque paire de lignes comportant le même potentiel électrique lors de la transmission de puissance et étant reliées galvaniquement l'une à l'autre aux deux extrémités du câble de transmission de puissance (3),
un raccord de données utiles étant prévu respectivement pour le raccordement d'un modem de données utiles (2C, 4C) aux deux extrémités du câble de transmission de puissance (3) pour au moins une paire de lignes, ledit modem de données utiles étant adapté pour envoyer et/ou recevoir un signal de données utiles transmis par le biais des deux lignes électriques de la paire de lignes,
**caractérisé en ce que**
le câble de transmission de puissance (3) comporte au moins une seconde paire de lignes constituée de deux lignes électriques (3-3, **3-4**) parallèles, à savoir une troisième ligne électrique (3-3) et une quatrième ligne électrique (3-4),
**en ce que**, à une première extrémité du câble de transmission de puissance (3), une première bobine d'inductance à courant compensé (5) dotée d'un premier enroulement (5A) et d'un second enroulement (5B) est prévue pour le découplage et
**en ce que**, à une seconde extrémité du câble de transmission de puissance (3), une seconde bobine d'inductance à courant compensé (7) dotée d'un premier enroulement (7A) et d'un second enroulement (7B) est prévue pour le découplage,
le premier enroulement (5A) de la première bobine d'inductance (5A) et le premier enroulement (7A) de la seconde bobine d'inductance (7) étant prévus sur la deuxième ligne électrique (3-2) et le second enroulement (5B) de la première bobine d'inductance (5A) et
le second enroulement (7B) de la seconde bobine d'inductance (7) étant prévus sur la troisième ligne électrique (3-3) du câble de transmission de puissance (3).

15. Câble de transmission de puissance selon la revendication 14, **caractérisé en ce que** la source de puissance (2A) est une source de courant de soudage et **en ce que** le récepteur de puissance (4A) est un chalumeau de soudage.
